# EUROPEAN PATENT APPLICATION

(11) **EP 4 520 721 A1**
(43) Date of publication of application: **12.03.2025**
(21) Application number: 22940529.5
(22) Date of filing: 02.05.2022
(51) Int. Cl.: C01D 15/00, C01D 15/06, C22B 3/00, C22B 3/04, C22B 3/20, C22B 3/22, C22B 26/12

(54) **PROCESS FOR OBTAINING HIGH-PURITY LITHIUM SULFATE MONOHYDRATE BY LEACHING FROM A LITHIUM SULFATE CONCENTRATE**

(71) Applicant: Sociedad Quimica y Minera de Chile, S.A., Las Condes, Santiago (CL)
(72) Inventor: YAÑEZ SAEZ, Osvaldo, 4285 Santiago (CL)
(74) Representative: ETL IP Patent- und Rechtsanwaltsgesellschaft mbH
(86) International application number: PCT/CL2022/050048
(87) International publication number: WO 2023/212833

(57) **Abstract**

This patent application refers to a process for obtaining lithium sulfate monohydrate by leaching from a lithium sulfate concentrate, with the objective of obtaining a high-grade lithium sulfate monohydrate ore with low impurity contents associated with potassium, magnesium and boron. Specifically, the invention corresponds to a process comprising leaching and washing a lithium sulfate concentrate. The process of the invention has the great advantage that it recirculates generated liquid waste, so that water consumption is low, while using lithium sulfate salt obtained from salt flats as the feed input.

## Description

### PRIOR ART

For years, high sulfate brine has only served as a Potassium producer, and the Lithium content has been returned to the salt flat through reinjection. This means that not all the extracted brine produces Lithium, even though it also has an important composition of this ion. Currently, practically all the brine extracted from the salt flat produces Potassium.

Lithium production in the salt flat contemplates 2 deposits, one where the predominant anion is Chlorine and another one that has a large amount of Sulfate. This difference is important because the production and/or refining process changes depending on the raw material.

Given the above, the processes that exist in the prior art are mainly focused on processes to produce lithium carbonate (Li₂CO₃) and, to a lesser extent, lithium hydroxide (LiOH*H₂0), from the first deposit; this is based on Chlorine and uses very little Sulfate. However, a technically and financially viable alternative of processing high Sulfate brines was not available, until now.

In the prior art, it is possible to find varied information for obtaining lithium salts. However, all of such information is significantly different from the process of the invention.

Chinese patent publication CN102921553 (A) describes a method for the flotation of Lithium Potassium Sulfate in a mixture with Sodium Chloride. The product floated in this application is Lithium Sulfate, which is a mineral species different from Lithium Potassium Sulfate. Furthermore, in this application, Lithium Sulfate is originally mixed with a number of minerals besides Sodium Chloride, such as Carnallite (hydrated Potassium Magnesium Chloride), Bischofite (hydrated Magnesium Chloride) and other contaminants which are also present, making the process more complex.

Chinese patent publication CN101318670 (A) describes a production process for extracting Lithium Chloride salt from a salt mixture containing Lithium Chloride salt and Bischofite (hydrated Magnesium Chloride) produced from brine that is evaporated in evaporation ponds. Although in both processes the mixture of salts before flotation is obtained by evaporation of brines in evaporation ponds, the obtained salts are different both in terms of the salt to be floated, since in the case of this application the saltis Lithium Sulfate and that of patent CN101318670 is Lithium Chloride, and in terms of the salts present in the mixture, since in addition to Bischofite, in this application, Sodium Chloride, Carnallite (Potassium Chloride and hydrated Magnesium Chloride) and other contaminants are also present.

Chinese patent publication CN109174438 (A) describes a classification process of spodumene ore beneficiation and belongs to the technical field of multi-metal beneficiation. Although spodumene flotation can be part of a process that generates Lithium Sulfate as an intermediate product, spodumene is a lithium aluminosilicate derived from a mixture of rocks and not from brines, which makes the raw material to be floated completely different from the one used in this application.

In turn, publication WO2020030305202 describes a method for extracting and concentrating lithium from a sedimentation ore. This method consists of the following stages:
- suspending the sedimentation ore in an aqueous solution.
- treating the aqueous solution with acid to dissolve lithium and form first precipitates; filtering the aqueous solution via pressure filters to remove said first precipitates; neutralizing the aqueous solution to form second precipitates and removing said second precipitates via pressure filters.

- crystallizing said aqueous solution to form magnesium sulfate and magnesium potassium sulfate crystals, and eliminating said magnesium sulfate and magnesium potassium sulfate crystals; and
- treating the aqueous solution with one or more pH modifiers and cation precipitating agents to form third precipitates and eliminating said third precipitates via pressure filters, forming a purified lithium sulfate brine.

This publication only explains the acid dissolution. However, it does not mention the actual leaching, let alone the brine/solid ratio, or the step of recirculating the brine to the leaching stage.

Thus, it is possible to assert that this invention salves a problem for which no solution previously existed, since it manages to concentrate lithium sulfate monohydrate with low contents of impurities associated to chlorine and magnesium from brines which used to be financially unattractive for purposes of exploiting the same for the production of Lithium. In other words, the most significant advantage of the invention's process is that it uses salts and brines which, currently, are not being processed and which have already been extracted for the production of potassium.

### BRIEF DESCRIPTION OF THE FIGURES

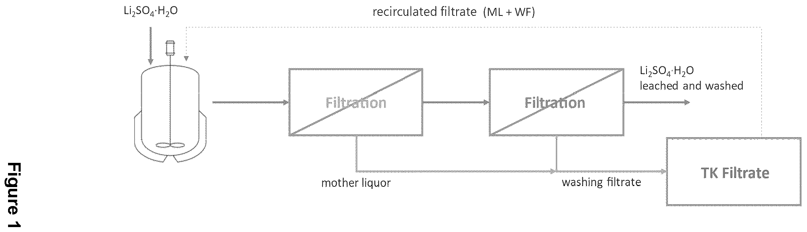

Figure 1: Depicts a diagram of the invention's process for obtaining lithium sulfate monohydrate by means of leaching.

### DETAILED DESCRIPTION OF THE INVENTION

The process to obtain high grade lithium sulfate monohydrate ore with low impurity contents includes two main stages, leaching and washing. The process starts with a salt feeding stage into a leaching tank, where water that has been previously heated to 80°C is fed at a ratio of 1.O water/solid p/p to initiate the shaking process and solubilize impurities. Subsequently, this pulp is sent to a filtration and washing stage. Washing will be done at a rate of 0.3 water/solid p/p, generating a strong filtrate stream and a weak filtrate stream, which are stored in a filtrate tank for later use.

In the next stage, solids are again fed into the leaching tank, but this time, brine is fed from the filtrate tank containing the mixture between the strong filtrate and weak filtrate that remain at 80°C from the filtration and washing stage, at a ratio of 1.0 brine/solid p/p. The generated mix is shaken and sent to a new filtration and washing stage, again generating strong and weak filtrate, which are mixed in the same filtration tank.

The range of validated lithium sulfate in the feed is around 90% - 85% lithium sulfate monohydrate, with 1 - 4% potassium Carnallite, 0.1 - 2.6% sodium chloride, 0.2 - 0.3% boron, 0.3 - 0.8% insoluble elements; the remainder being mainly impurities associated with sulfate species, among which we find: 0.2 - 2.5% potassium sulfate, 0.2 - 0.3% calcium sulfate di-hydrate, 0.7 - 1.5% magnesium sulfate.

After the washing stage has been completed, the product obtained has a lithium sulfate monohydrate grade of over 97%. Figure 1 contains a diagram of the invention's process.

The invention's leached lithium sulfate monohydrate production process presents the following chemical analyses, which are detailed in Table 1.

| Stage | K [%] | Na [%] | Mg [%] | Ca [%] | SO₄ [%] | Li [%] | Cl [%] | H₃B 0₃ [%] |
|---|---|---|---|---|---|---|---|---|
| Feed | 1.00 % | 0.14 % | 0.88 % | 0.04 % | 68.75 % | 9.70 % | 2.57 % | 1.18 % |
| Li₂SO₄*H₂O Leaching | 0.38 % | 0.09 % | 0.12 % | 0.09 % | 73.89 % | 10.56 % | 0.39 % | 0.09 % |

### EXAMPLE

To begin with, laboratory scale tests were conducted to test the process of obtaining high purity lithium sulfate through leaching, using beakers, shakers, and a filtration system.

The range of Lithium Sulfate feed that has been validated at a pilot scale is approximately 89% Lithium Sulfate monohydrate.

A precipitate beaker was used for the leaching stage, where salt and water were added at a 1.0 solid/water p/p ratio. Mechanical shaking is carried out, and then the pulp is put into a filtration system, increasing the grade to 92% lithium sulfate.

The following table shows the results obtained from the tests performed in the laboratory.

**Table 2: Chemical analyses, leaching test, laboratory scale**

| **Stage** | K[%] | Na[%] | Mg[%] | Ca[%] | SO₄[%] | Li[%] | Cl [%] | H₃BO₃[%] |
|---|---|---|---|---|---|---|---|---|
| Feed | 0.81 % | 0.18 % | 1.06 % | 0.05 % | 68.55 % | 9.78% | 3.54 % | 1.39% |
| Batch #1 | 0.35 % | 0.01 % | 0.11 % | 0.01 % | 72.91 % | 10.45 % | 0.21 % | 0.59% |
| Batch #2 | 0.37 % | 0.01 % | 0.17 % | 0.02 % | 70.98 % | 10.15 % | 0.36 % | 0.87% |
| Batch #3 | 0.42 % | 0.02 % | 0.17 % | 0.04 % | 72.73 % | 10.39 % | 0.37 % | 0.91% |
| Batch#4 | 1.22 % | 0.02 % | 0.30 % | 0.07 % | 74.56 % | 10.50 % | 0.75 % | 1.17% |
| Batch #5 | 0.50 % | 0.02 % | 0.18 % | 0.04 % | 71.62 % | 10.22 % | 0.42 % | 1.13% |

Given these results, pilot scale tests were carried out, relying on leaching to use and validate the lithium sulfate concentration process, using shaken reactors and filtration equipment.

The range of Lithium Sulfate feed that has been validated at pilot scale is around 89% Lithium Sulfate monohydrate, with the remainder being mainly impurities associated with potassium (0.4-1.6%), sodium (0.05-1.0%), magnesium (0.1-0.6%), boron (0.2-0.3%) and chlorine (0.5-3.1%).

For the leaching stage, a shaken reactor is used, in which the feed salt and brine are added at a 1.0 brine/solid p/p ratio and shaken by means of a mechanical shaker.

Subsequently, the obtained pulp is passed onto a filtration system to increase the grade of lithium sulfate monohydrate to over 97% purity.

## Claims

1. Process to obtain lithium sulfate monohydrate from lithium sulfate concentrate with the objective of obtaining high-grade lithium sulfate monohydrate ore with low impurity contents associated to potassium, magnesium and boron, **CHARACTERIZED in that** a first stage consists of feeding lithium sulfate monohydrate salts to a tank where leaching is carried out using water previously heated to 80°C and fed at a ratio of 1.0 water/solid p/p, in order to initiate a shaking process with the objective of solubilizing impurities; then, such shaking process generates a pulp that is sent to a filtration and washing stage, thus producing a strong filtrate stream and a weak filtrate stream, which are stored in a filtration tank for later use.

2. The process to obtain lithium sulfate monohydrate from lithium sulfate concentrate with the objective of obtaining high-grade lithium sulfate monohydrate ore in accordance with claim 1, **CHARACTERIZED in that** said pulp is washed at a ratio of 0.3 water/solid p/p.

3. The process to obtain lithium sulfate monohydrate from lithium sulfate concentrate with the objective of obtaining high-grade lithium sulfate monohydrate ore monohydrate in accordance with claim 1, **CHARACTERIZED in that** after the leaching stage, said strong filtrate stream and weak filtrate stream are recirculated and mixed with feed saltin the leaching tank at a ratio of 1.0 solid/brine p/p, in order to be subjected again to leaching.

4. The process to obtain lithium sulfate monohydrate from lithium sulfate concentrate with the objective of obtaining high-grade lithium sulfate monohydrate ore in accordance with claim 3, **CHARACTERIZED in that** the generated and filtered pulp that is newly generated from the leaching, is washed at a ratio of 0.3 water/solid p/p in order to once again displace remaining impurities and impregnation, thus increasing the grade of the lithium sulfate monohydrate concentrate to over 97% purity.

5. The process to obtain lithium sulfate monohydrate from lithium sulfate concentrate with the objective of obtaining a high-grade lithium sulfate monohydrate ore in accordance with claim 3, **CHARACTERIZED in that** in both the first filtration and the washing stage, a brine is generated and then recirculated to said leaching, to reduce yield losses and lower water consumption.

6. The process to obtain lithium sulfate monohydrate from lithium sulfate concentrate with the objective of obtaining high-grade lithium sulfate monohydrate ore in accordance with claim 3, **CHARACTERIZED in that** said filtration is carried out in a filtering equipment that allows for the separation of brines and their subsequent recirculation to the system.

7. The process to obtain lithium sulfate monohydrate from lithium sulfate concentrate with the objective of obtaining high-grade lithium sulfate monohydrate ore in accordance with claim 1, **CHARACTERIZED in that** the lithium sulfate range of the feed is composed of around 90 - 85% lithium sulfate monohydrate, 1 - 4% potassium Carnallite, 0.1 - 2.6% sodium chloride, 0.2 - 0.3% boron, and 0.3 - 0.8% insoluble elements; the remainder is mostly composed of impurities associated with sulfate species, among them the following: 0.2-2.5% potassium sulfate, 0.2 - 0.3% calcium sulfate di-hydrate, and 0.7-1.5% magnesium sulfate.

8. The process to obtain lithium sulfate monohydrate from lithium sulfate concentrate with the objective of obtaining high-grade lithium sulfate monohydrate ore in accordance with claim 1, **CHARACTERIZED in that** the lithium sulfate range of the feed is composed of around 89% lithium sulfate monohydrate.
